# EUROPÄISCHE PATENTSCHRIFT

(11) **EP 1 771 290 B1**
(45) Veröffentlichungstag und Bekanntmachung des Hinweises auf die Patenterteilung: **19.01.2011**
(21) Anmeldenummer: 05768972.1
(22) Anmeldetag: 21.07.2005
(51) Int. Cl.: B29C 45/53, B29C 45/54, B29C 45/58, B29C 45/76, B29C 45/78

(54) **SPRITZGIESSMASCHINE UND VERFAHREN ZUM SPRITZGIESSEN**
INJECTION MOLDING MACHINE AND INJECTION MOLDING METHOD
MACHINE DE MOULAGE PAR INJECTION ET PROCEDE DE MOULAGE PAR INJECTION

(30) Priorität: 22.07.2004 DE 102004035553; 29.09.2004 DE 102004047347
(43) Veröffentlichungstag der Anmeldung: 11.04.2007
(73) Patentinhaber: Landshuter Werkzeugbau Alfred Steinl GmbH & Co. KG, 84032 Altdorf (DE)
(72) Erfinder: WEYAND, Stefan, 64720 Michelstadt (DE); DEGENBECK, Hubert, 84103 Postau/Oberköllnbach (DE); SCHMIDT, Rainer, 84032 Altdorf (DE)
(74) Vertreter: Vossius & Partner
(86) Internationale Anmeldenummer: PCT/EP2005/007969
(87) Internationale Veröffentlichungsnummer: WO 2006/008164

(56) Entgegenhaltungen:
- DE-A1- 2 201 404
- GB-A- 1 166 473
- US-A- 2 227 263
- US-A- 2 359 840
- US-A- 2 478 013
- US-A- 2 881 477
- US-A- 3 516 123
- US-A- 3 989 793
- JOHANNABER, F. ; MICHAELI, W.: "Handbuch Spritzgiessen" 2001, CARL HANSER , XP002357802 Seite 17 - Seite 19; Abbildung 1.11 Seite 1004 - Seite 1007; Abbildungen 8.8d,8.8f,8.48 Seite 1043 - Seite 1046
- PATENT ABSTRACTS OF JAPAN Bd. 008, Nr. 191 (M-322), 4. September 1984 (1984-09-04) -& JP 59 081144 A (MITSUBISHI JUKOGYO KK), 10. Mai 1984 (1984-05-10)
- LAUHUS, W. P.: "Spritzgiessmaschinen für Elastomere" KUNSTSTOFFE, Bd. 89, Nr. 5, 1999, XP002357800

## Beschreibung

Die vorliegende Erfindung betrifft eine Spritzgießmaschine, insbesondere Spritzeinheit und ein Verfahren zum Spritzgießen von Kunststoffmaterialien, insbesondere Elastomeren bzw. Kautschukmaterial, in Kaltkanaltechnik und Heißkanaltechnik.

In der Kaltkanaltechnik werden üblicherweise mehrere Spritzgießerzeugnisse in einem Spritzgießvorgang gleichzeitig hergestellt, wobei die Zuführung des Kautschukmaterials durch einen Kaltkanalblock erfolgt, in dem sich einzelne Kanäle zu mehreren Hohlräumen einer Form für die jeweiligen Spritzgießerzeugnisse erstrecken. Vor dem Öffnen der Form muss der Spritzkolben der Spritzgießmaschine zur Druckentlastung des Kaltkanals zurückgezogen werden, wobei die relativ langen Kanäle den Rückfluss des Materials erschweren. Des Weiteren ist bei bekannten Spritzgießmaschinen nachteilig, dass häufig nach dem Einspritzen im Düsenstockkanal Altmaterial verbleibt.

Beim Heißkanalverfahren wird oft beobachtet, dass das Material in Form eines Schlauches an der Wand des Düsenstockkanals bzw. der Maschinendüse zurückbleibt und das neue Material durch diesen Schlauch gefördert wird. Bei hohem Schergefälle kann sich dieser aus anvulkanisiertem Material bestehende Schlauch ablösen, und die Maschinendüse bzw. das Verteilerkanalsystem blockieren. Um eine vollständige Entleerung des Düsenstocks zu garantieren, muss daher in der Praxis oft ein kurzer "Abspritzvorgang" vorgeschaltet werden.

Die DE 7 236 994 U1 offenbart eine Spritzgießmaschine mit einem Plastifizier- und Spritzaggregat, das einen Spritzzylinder und einen darin beweglich vorgesehenen Einspritzkolben aufweist. Das gesamte Plastifizier- und Spritzaggregat ist mittels Hydraulikzylinder axial verschiebbar gelagert. Der Einspritzkolben ist mit zwei beidseitig angeordneten Kolben verbunden, die in Hydraulikzylindern des Spritzzylinders axial verschiebbar gelagert sind. Darüber hinaus ist der Einspritzkolben als Zylinder ausgebildet, in dem eine Plastifizierschnecke drehbar gelagert ist. Die Plastifizierschnecke ist zusammen mit einem Motor über Staudruckzylinder, in die Kolben des Einspritzkolbens eintauchen, gegenüber dem Einspritzkolben geringfügig axial verschiebbar.

Die DE 19 17 975 A1 offenbart eine Spritzgießmaschine, bei der während des Plastifizierens des durch einen Trichter in einen Plastifizierzylinder eingeführten Spritzgutes eine Schnecke mittels eines Motors über ein Getriebe rotierend angetrieben wird. Der dadurch erzeugte Förderdruck im Zylinder bewirkt ein axiales Zurückgehen der Schnecke bis in ihre hintere Endlage, in der der Schneckenkopf von einem Ventilsitz abgehoben ist, und somit dem plastifizierten Spritzgut den Durchgang aus dem Zylinder über einen Zuführkanal und einen Ast eines Einspritzkanals in einen durch gleichzeitiges Zurückweichen eines Kolbens sich vergrößernden Hohlraum eines Zylinders ermöglicht. Wenn sich die gewünschte Spritzgutmenge im Zylinder befindet, kann der Einspritzvorgang ausgelöst werden.

Die DE 195 38 255 C2 betrifft eine Spritzgießeinrichtung, bei der der Kolben das plastifizierte Kunststoffmaterial in eine Einspritzkammer fördert, während ein in der Einspritzkammer vorgesehener Kolben reversiert.

Weitere Spritzgießmaschinen sind beispielsweise aus Johannaber, F.; Michaeli, W.: "Handbuch Spritzgiessen" 2001 und Lauhus, W.P.: "Spritzgiessmaschinen für Elastomere", Kunststoffe, 1999 bekannt.

Die Verwendung von Drosseln wird beispielsweise in der US 2 478 013 und der GB 1 166 061 beschrieben.

Der vorliegenden Erfindung liegt die Aufgabe zu Grunde, eine verbesserte Spritzeinheit und ein verbessertes Spritzgießverfahren bereitzustellen, wobei die im Stand der Technik bekannten Nachteile vermieden werden und insbesondere kürzere Zykluszeiten und hohe Einspritzdrücke am Düsenausgang auch bei großem Spritzvolumen ermöglicht werden. Diese Aufgabe wird mit der in den Ansprüchen definierten Spritzeinheit und dem beanspruchten Spritzgießverfahren gelöst.

Die Erfindung geht dabei von dem Grundgedanken aus, an der Spritzgießmaschine neben einer ersten Kolben-/Zylindereinheit eine zweite Kolben-/Zylindereinheit in Serie zur ersten vorzusehen. Der Zylinder der ersten Kolben-/Zylindereinheit mündet dabei in das Ende der zweiten Kolben-/Zylindereinheit, das von einer zu befüllenden Spritzgießform entfernt liegt. Die zweite Kolben-/Zylindereinheit ersetzt den gegebenenfalls vorhandenen Düsenstock. Mit dem Kolben der zweiten Kolben-/Zylindereinheit wird anders als bei einer herkömmlichen Spritzeinheit der Düsenstock bzw. die zweite Zylindereinheit vollständig entleert. Dadurch lassen sich Druckverluste und unerwünschte Materialreste im Düsenstock vermeiden. Die erfindungsgemäße Spritzeinheit zum Spritzgießen von Kautschukmaterialien ist insbesondere für die Kaltkanaltechnik geeignet, gleichermaßen jedoch auch für Heißkanalspritzgießverfahren zu verwenden.

Die Spritzeinheit weist einen Extruder, eine erste Kolben-/Zylindereinheit und eine in Serie dazu vorgesehene zweite Kolben-/Zylindereinheit auf. Die erste Kolben-/Zylindereinheit ist angepasst, Elastomermaterial durch den Zylinder der zweiten Kolben-/Zylindereinheit in eine Spritzgießform zu fördern. Bei der erfindungsgemäßen Anordnung ersetzt die zweite Kolben-/Zylindereinheit also den üblicherweise vorhandenen Düsenstock, so dass gewährleistet ist, dass keinerlei Kunststoffrnaterialreste im Düsenstock zurückbleiben. Damit lässt sich insbesondere beim Spritzgießen von Elastomermaterialien der Vorteil erzielen, dass auch bei Temperaturen der zweiten Kolben-/Zylindereinheit (insbesondere an dem der Form zugewandten Ende der zweiten Kolben-/Zylindereinheit), oberhalb der Grenztemperatur, bei der eine Vulkanisierung des Elastomermaterials einsetzt (ca. 120°C), die Spritzgießmaschine betrieben werden kann, wodurch kürzere Spritzzyklen erreichbar sind. Die zweite Kolben-/ Zylindereinheit ist vorzugsweise derart angepasst, dass das Elastomermaterial unter höherem Druck als mit der ersten Kolben-/Zylindereinheit alleine in die Spritzgießform eingebracht werden kann.

Gemäß einer bevorzugten Ausführungsform sind die beiden Kolben-/Zylindereinheiten im Wesentlichen senkrecht zueinander angeordnet, wobei vorzugsweise die erste Kolben-/Zylindereinheit im Wesentlichen horizontal und die zweite Kolben-/Zylindereinheit im Wesentlichen vertikal angeordnet sind. Die beiden Kolben-/Zylindereinheiten sind vorzugsweise durch ein Umlenkstück miteinander verbunden. Der Zylinder der zweiten Kolben-/Zylindereinheit ist vorzugsweise durch das Umlenkstück hindurch verlängert. Der Kolben der zweiten Kolben-/Zylindereinheit erstreckt sich vorzugsweise durch das Umlenkstück hindurch. Der Kolben der zweiten Kolben-/Zylindereinheit weist mindestens zwei durchmessergrößere Abschnitte und einen dazwischen liegenden durchmesserkleineren Abschnitt auf. Die Durchmessergrößeren Abschnitte werden auch als Kolbenhemden bezeichnet. Der Durchmesser der Kolbenhemden entspricht im Wesentlichen dem Durchmesser des Zylinders der zweiten Kolben-/Zylindereinheit.

Des Weiteren ist bevorzugt, dass die erfindungsgemäße Spritzgießmaschine mit einer Blas-/Saugeinheit ausgestattet ist, die mit mindestens einer der Kolben-/Zylindereinheiten in Verbindung steht. Die Blas-/Saugeinheit ist vorzugsweise am Umlenkstück, gegenüberliegend zur ersten Kolben-/Zylindereinheit vorgesehen. Mit Hilfe der Blas-/Saugeinheit lässt sich vor dem Spritzen der Zylinderraum mindestens der zweiten Kolben-/Zylindereinheit evakuieren und nach dem Spritzen der Sauganschluss der Blas-/Saugeinheit reinigen. Dazu ist vorzugsweise ein Stößel zum Ausdrücken von Materialresten aus dem Sauganschluss vorgesehen, wobei gleichzeitig öder zeitversetzt die losgelösten Materialreste mittels der Blas-/Saugeinheit aus der zweiten Kolben-/Zylindereinheit herausgeblasen werden.

Der Extruder der erfindungsgemäßen Spritzgießmaschine kann vorzugsweise in der ersten Kolben-/Zylindereinheit angeordnet sein; es ist jedoch auch möglich, den Extruder und die erste Kolben-/Zylindereinheit in Form zweier separater Einrichtungen zu realisieren.

Beim erfindungsgemäßen Spritzgießverfahren wird zunächst das Kunststoffmaterial (z.B. Elastomermaterial) in eine Spritzgießform mittels einer einen ersten Kolben und einen ersten Zylinder aufweisenden ersten Kolben-/Zylindereinheit zugeführt, wobei das Elastomermaterial durch einen zweiten Zylinder einer zweiten Kolben-/Zylindereinheit hindurch geführt wird. Der Zylinder der ersten Kolben-/Zylindereinheit mündet in das Ende der zweiten Kolben-/Zylindereinheit, das von der Spritzgießform entfernt liegt. Der zweite Kolben gibt dabei den Strömungsweg zur Spritzgießform frei. Nachfolgend wird der zweite Kolben im zweiten Zylinder bewegt, um das im zweiten Zylinder befindliche Elastomermaterial in die Spritzgießform einzubringen. Vorzugsweise wird das Elastomermaterial durch die zweite Kolben-/ Zylindereinheit unter höherem Druck in die Spritzgießform eingebracht, als dies mit der ersten Kolben-/Zylindereinheit alleine möglich wäre. Der Arbeitsdruck der ersten Kolben-/Zylindereinheit liegt beispielsweise etwa im Bereich zwischen 1500 und 1800 bar, wohingegen der Druck des Kolbens der zweiten Kolben-/Zylindereinheit bis zu 2500 bar betragen kann.

Anschließend wird der zweite Kolben zurückgefahren. Dabei kann sich bei Kaltkanalverfahren der Druck in dem Kaltkanalblock entspannen, d.h. Material fließt durch die Düse in den Zylinderraum der Kolben-/Zylindereinheit zurück.

Gemäß einer bevorzugten Weiterbildung des erfindungsgemäßen Spritzgießverfährens wird vor dem Zuführen des Kunststoffmaterials (Elastomermaterials) der Zylinderraum der Kolben-/Zylindereinheit(en), insbesondere der zweiten Kolben-/Zylindereinheit, mittels einer Blas-/Saugeinheit evakuiert. Hierzu ist der zweite Kolben soweit aus dem zweiten Zylinder ausgefahren, dass vorzugsweise mindestens der Zylinderraum der zweiten Kolben-/Zyundereinheiten sowie die Kanäle im Umlenkstück und im Werkzeug evakuiert werden können. Nach dem Evakuieren fährt der zweite Kolben vorzugsweise soweit in den zweiten Zylinder ein, dass er den Sauganschluss der Blas-/Saugeinheit verschließt, um den evakuierten Zustand zum Zuführen des Kunststoffmaterials aufrechtzuerhalten.

Die Blas-/Saugeinheit kann vorzugsweise weiterhin eine Reinigungsfinktion übernehmen, indem beispielsweise durch einen Stößel der Sauganschluss der Blas-/Saugeinheit von Materialresten befreit wird. Diese Materialreste werden dann vorzugsweise durch Ausblasen aus den Zylinderräumen entfernt, wozu der zweite Kolben aus dem zweiten Zylinder ausgefahren wird.

Bei Verwendung der Heißkanaltechnik ist es weiterhin möglich, über eine einstellbare oder regelbare Drossel im Umlenkstück das Material weiter aufzuheizen bzw. auf eine vorgegebene Solltemperatur einzustellen und durch die höhere Starttemperatur eine kürzere Heiz-/Zykluszeit zu erreichen. Diese weitere Temperaturerhöhung ist problemlos möglich, weil der Zylinder der zweiten Kolben-/Zylindereinheit anschließend komplett- entleert wird und kein Material im Zylinder anvulkanisieren kann.

Nachfolgend werden bevorzugte Ausführungsformen der erfindungsgemäßen Spritzgießmaschine und des erfindungsgemäßen Spritzgießverfahrens beispielhaft anhand der Zeichnungen beschrieben. Es zeigen:
- Figur 1: eine schematische Seitenansicht im Teilschnitt einer erfindungsgemäßen Spritzeinheit;
- Figur 2: eine teilweise geschnittene Seitenansicht eines Teils der erfindungsgemäßen Spritzgießmaschine während des Zuführens des Elastomermaterial in die Spritzgießform;
- Figur 3: eine Seitenansicht ähnlich Figur 2, wobei der zweite Kolben der zweiten Kolben-/Zylindereinheit eingefahren ist, um das Elastomermaterial mit hohem Druck in die Spritzgießform einzubringen und um den Zylinder der zweiten Kolben-/Zylindereinheit komplett zu leeren;
- Figur 4: eine weitere Seitenansicht ähnlich den Figuren 2 und 3, wobei der zweite Kolben vollständig aus dem zweiten Zylinder ausgefahren ist, und die Blas-/ Saugeinheit den Vakuumanschluss frei bläst (optional);
- Figur 5: eine Absicht ähnlich den Figuren 2 bis 4, wobei der zweite Kolben soweit in den zweiten Zylinder eingefahren ist, um ein Evakuieren des Zylinderhohlraums der Kolben-/Zylindereinheit(en) sowie der Werkzeugkanäle und -hohlräume zu ermöglichen; und
- Figur 6: eine schematische Seitenansicht einer zweiten Ausführungsform einer erfindungsgemäßen Spritzeinheit.

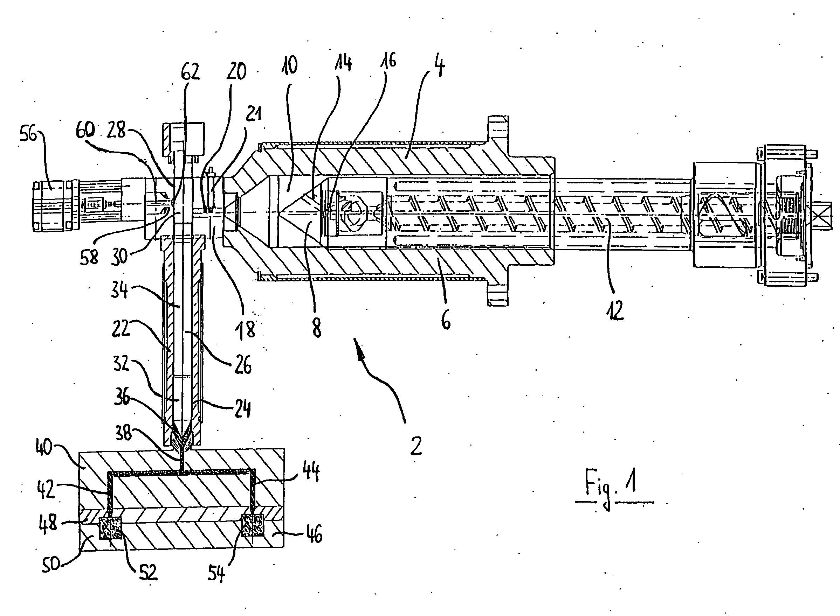

Die in Figur 1 schematisch in Seitenansicht dargestellte Spritzeinheit 2 weist eine erste Kolben-/Zylindereinheit 4 auf, die einen ersten Zylinder 6 und einen ersten Kolben 8 hat. Der Zylinder 6 und der Kolben 8 bilden einen ersten Zylinderraum- 10, in den mittels eines im Kolben 8 angeordneten Extruders 12 Kunststoffmaterial, insbesondere Elastomermaterial, einbringbar ist. Der Kolben 8 weist hierzu mindestens eine Durchgangsöffnung 14, vorzugsweise drei Durchgangsöffnungen, auf, durch die das durch den Extruder 12 plastifizierte Kunststoffmaterial strömen kann, wenn ein Durchlassventil 16 geöffnet ist.

Der Zylinderraum 10 der ersten Kolben-/Zylindereinheit 4 mündet in ein Umlenkelement bzw. -stück 18, in dem ein Kanal 20 und eine in ihrem Strömungsquerschnitt einstellbare bzw. regelbare Drossel 21 vorgesehen sind. Die Drossel 21 ist beispielsweise in Form eines im Querschnitt elliptischen Schiebers ausgebildet. Die Drossel 21 kann ferner oder alternativ mit einer Temperaturregelung gekoppelt sein, um eine optimal Betriebstemperatur des Kunststoffmaterials einzustellen.

Am Umlenkstück 18 ist ferner eine zweite Kolben-/Zylindereinheit 22 vorgesehen, die einen zweiten Zylinder 24 und einen zweiten Kolben 26 aufweist. Der zweite Kolben 26 erstreckt sich durch einen weiteren Kanal 28 des Verbindungsstücks 18 hindurch, wobei die beiden Kanäle 20 und 28 miteinander in Verbindung stehen. Der Kolben 26 der zweiten Kolben-/Zylindereinheit 22 weist vorzugsweise zwei durchmessergrößere Kolbenhemden 30, 32 sowie einen dazwischenliegenden durchmesserkleineren Bereich 34 auf. Die zweite Kolben-/ Zylindereinheit 22 definiert mit ihrem Zylinder 24 und Kolben 26 einen zweiten Zylinderraum 36, der in dem in Figur 1 dargestellten Verfahrenszustand mit Elastomermaterial 38 gefüllt ist. Der Zylinder 24 der zweiten Kolben-/Zylindereinheit 22 ist also mit seinem in den Zeichnungen oben dargestellten Ende, d.h. seinem der ersten Kolben-/Zylindereinheit 4 zugewandten stromaufwärtigen Ende, mit der ersten Kolben-/Zylindereinheit 4 seriell verbunden.

Das Elastomermaterial 38 strömt durch Heißkanäle (nicht dargestellt) oder, wie in Figur 1 gezeigt, durch einen Kaltkanalblock 40, der mit mehreren Strömungskanälen 42, 44 versehen ist, um das Elastomermaterial 38 zur Spritzgießform 46 zu führen. Die Spritzgießform 46 besteht aus einer oberen Formhälfte 48 und einer unteren Formhälfte 50, die zusammen mehrere Formhohlräume 52, 54 definieren.

Die erfindungsgemäße Spritzeinheit 2 verfügt ferner vorzugsweise über eine Blas-/Saugeinheit 56, die am Verbindungsstück 18, gegenüberliegend zur ersten Kolben-/Zylindereinheit 4 angeordnet ist. Die Blas-/Saugeinheit 56 ist über einen weiteren Kanal 58 im Verbindungsstück 18 mit den Zylinderräumen 10 und 36 in Verbindung. Die Blas-/ Saugeinheit 56 ist sowohl zum Evakuieren des Zylinderraums 36 als auch des im Verbindungsstück 18 vorgesehen Kanals 28 geeignet. Vorzugsweise weist die Blas-/Saugeinheit 56 ferner einen Stößel 60 zum Verschließen der Saugöffnung 62 auf.

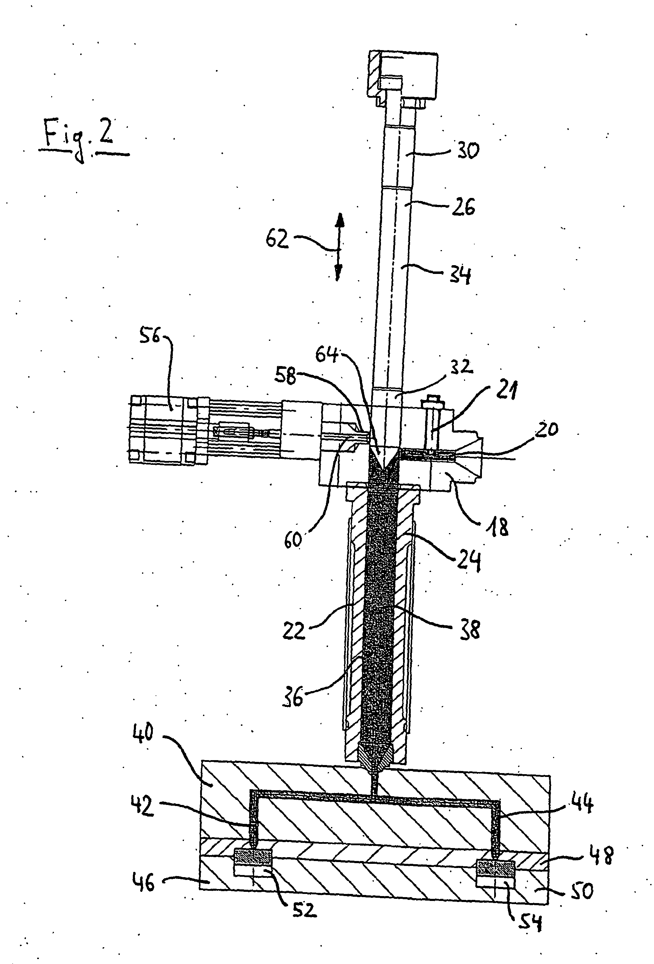

Unter Bezugnahme auf die Figuren 2 bis 5 wird nachfolgend ein Spritzzyklus mit der erfindungsgemäßen Spritzgießmaschine näher erläutert. Der Übersichtlichkeit halber ist in diesen Figuren die erste Kolben-/Zylindereinheit weggelassen. In der in Figur 2 dargestellten Situation wird das Kunststoffmaterial 38 mit dem ersten Kolben 8 der ersten Kolben-/ Zylindereinheit 4 durch den Kanal 20 des Verbindungsstücks 18 in den Zylinderraum 36 des zweiten Zylinders 24 der zweiten Kolben-/Zylindereinheit 22 gefördert. Der zweite Kolben 26 ist dabei aus dem Zylinderraum 36 entlang der Pfeilrichtung 62 soweit ausgefahren, dass ein Endabschnitt 64 des zweiten Kolbens die Verbindung zwischen den beiden Zylinderräumen 10 und 36 über den Kanal 20 freigibt. Das durchmessergrößere Kolbenhemd 32 schließt den Zylinderraum 36 nach oben und den Kanal 58 im Verbindungsstück 18 seitlich ab. Dadurch wird beim Vorwärtsbewegen des Kolbens 8. der ersten Kolben-/Zylindereinheit 4 das Elastomermaterial 38 durch den Zylinderraum 36 in die Kanäle 42, 44 des Kaltkanalblocks 40 und in die Formhohlräume 52, 54 gefördert, bis der Zylinderraum 10 vollständig entleert ist. Wie dargestellt sind die Formhohlräume 52, 54 bereits weitgehend gefüllt.

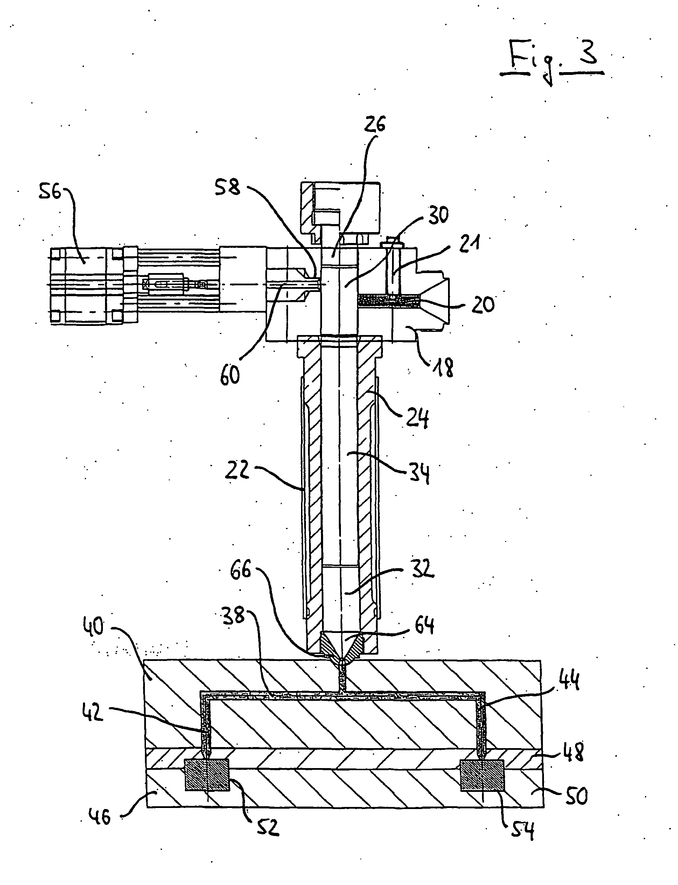

Im Anschluss daran wird, wie in Figur 3 gezeigt, die zweite Kolben-/Zylindereinheit 22 aktiviert, indem der Kolben 26 in den Zylinder 24 eingefahren wird, um das im Zylinderraum 36 befindliche Elastomermaterial 38 in die Form 46 zu spritzen und die Formhohlräume 52, 54 vollständig zu füllen. Da der Durchmesser des zweiten Kolbens 26 der zweiten Kolben-/Zylindereinheit 22 kleiner ist als der Durchmesser des Kolbens 8 der ersten Kolben-/Zylindereinheit 4, lassen sich mit der erfindungsgemäßen Spritzgießmaschine mit relativ geringem Aufwand höhere Drücke realisieren (z.B. bis 2500 bar) als mit herkömmlichen Spritzgießmaschinen. In der in Figur 3 dargestellten Position der zweiten Kolben-/Zylindereinheit 22 verschließt das obere Kolbenhemd 30 sowohl den Kanal 20 zum Zylinderraum 10 als auch den Kanal 58 zur Blas-/Saugeinheit 56. Das untere Kolbenhemd 32 mit dem Endabschnitt 64 verschließt den Eingang 66 zum Kaltkanalblock 40 dicht. Der durchmesserkleinere Bereich 34 zwischen den beiden Kolbenhemden 30, 32 erlaubt ein Verschieben des Kolbens 26 mit relativ geringem Reibungswiderstand.

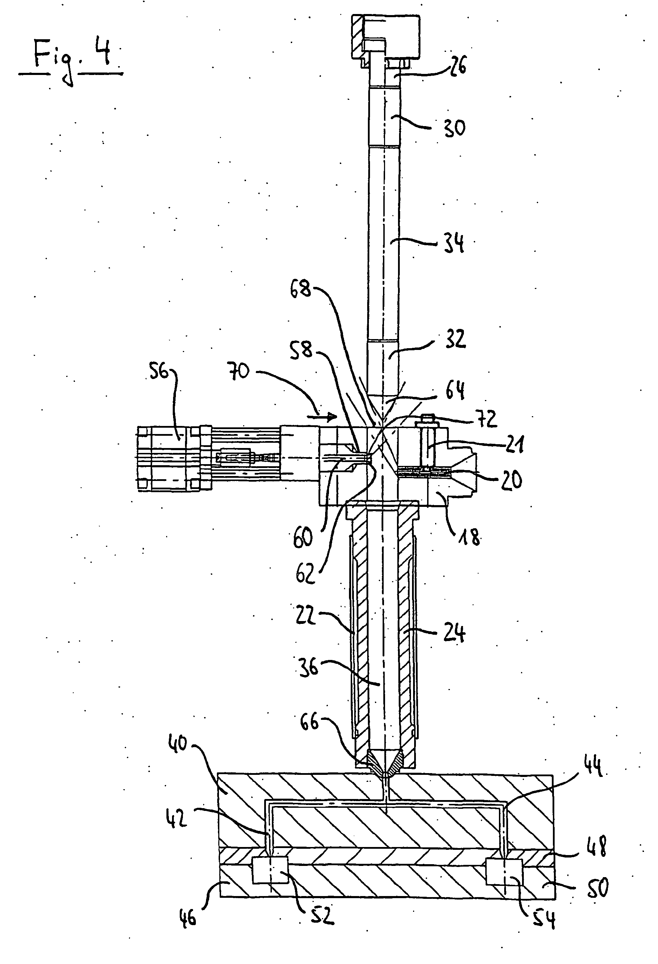

Nach dem Füllen der Form wird der Kolben 26 der zweiten Kolben-/Zylindereinheit 22 vorzugsweise nach einer bestimmten Zeit zum Entspannen des Drucks in die in Figur 4 dargestellte Blasposition im Wesentlichen vollständig aus dem Zylinderraum 36 gefahren, so dass der Zylinderraum 36 nach oben offen ist, um eine Ausblasöffnung 68 bereitzustellen. Der Stößel 60 der Blas-/Saugeinheit 56 fährt in die mit dem Pfeil 70 angedeutete Richtung in den Zylinderraum 36, um Materialreste vom Sauganschluss 62 abzulösen. Gleichzeitig oder zeitversetzt liefert die Blas-/Saugeinheit 56 Blasluft durch den Kanal 58, um das Loslösen der Materialreste zu fordern und die losgelösten Materialreste durch die Öffnung 68 auszublasen, wie anhand der Linien 72 in Figur 4 angedeutet.

Bevor der Kolben 26 aus dem Zylinder 24 der zweiten Kolben-/Zylindereinheit 22 gefahren wird, kann es zweckmäßig sein, den ersten Kolben 8 der ersten Kolben-/Zylindereinheit 4 zurückzufahren, um den Druck auf den Kolben 26 zu reduzieren.

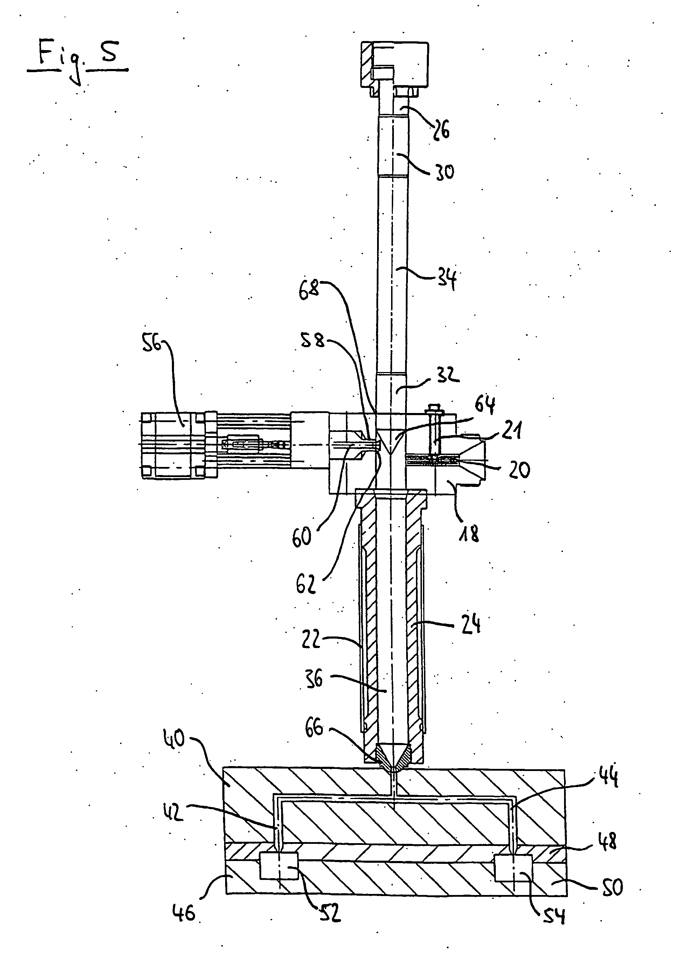

Im Anschluss daran wird der Kolben 26 in die in Figur 5 dargestellte Saugposition in den Zylinderraum 36 eingefahren, so dass das untere Kolbenhemd 32 die Öffnung 68 verschließt. Der Kanal 20 zum ersten Zylinderraum 10 sowie der Kanal 58 zur Blas-/Saugeinheit 56 bleiben jedoch geöffnet, so dass die Blas-/Saugeinheit 56 durch Erzeugen eines Unterdrucks die Hohlräume 36 der zweiten Kolben-/ Zylindereinheiten 22 und die Kanäle 20, 58 des Verbindungsstücks 18 evakuieren kann. Dadurch wird erreicht, dass beim Einspritzen des Kautschukmaterials keine Luft in den in der Vorrichtung vorhandenen Hohlräumen vorhanden ist und in die Form gelangt. Im Anschluss an die in Figur 5 dargestellte Saugposition fährt der Kolben weiter in den Zylinderraum 36 ein, um den Kanal 58 zu verschließen, wie in Figur 2 dargestellt, so dass ein neuer Spritzzyklus beginnen kann.

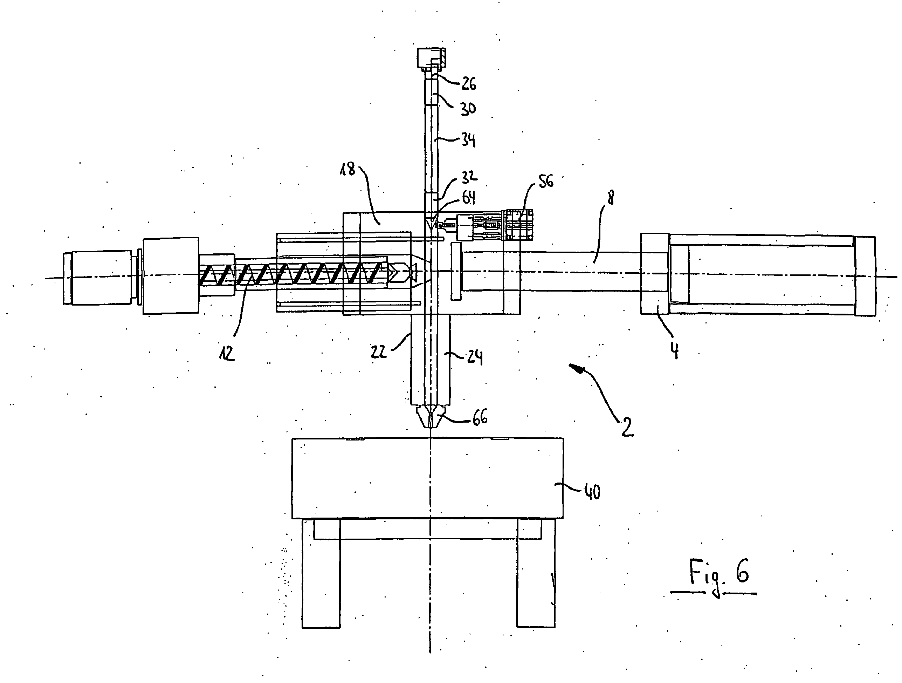

In Figur 6 ist eine alternative Ausführungsform der erfindungsgemäßen Spritzgießmaschine dargestellt, die im Wesentlichen nach demselben Prinzip arbeitet. In dieser Ausführungsform sind der Extruder 12 und die erste Kolben-/Zylindereinheit 4 als separate Einrichtungen ausgebildet. Dementsprechend stellt der Extruder 12 das plastifizierte Elastomermaterial bereit und führt es in das Verbindungsstück 18 und den Zylinderraum der ersten Kolben-/ Zylindereinheit 4. Der erste Kolben 8 führt das Kunststoffmaterial anschließend zur Spritzgießform und der zweite Kolben 26 füttert das Kunststoffmaterial vollständig in die Spritzgießform und bringt den zum Spritzgießen erforderlichen Druck auf. Die Funktionsweise ist identisch mit der zuvor beschriebenen Funktionsweise für die Spritzeinheit gemäß der ersten Ausführungsform.

Das Füllen der Spritzgießform erfolgt beim erfindungsgemäßen Verfahren vorzugsweise in zwei Phasen, nämlich einer ersten Phase, in der die erste Kolbenzylindereinheit 4 das Material durch die zweite Kolben-/Zylindereinheit fördert, und in einer zweiten Phase, in der die zweite Kolben-/Zylindereinheit das Restmaterial vollständig in die Form unter ausreichendem Druck einbringt. Während der ersten Phase erfolgt vorzugsweise eine Geschwindigkeitsregelung, d.h. eine Regelung des Volumenstroms des Kunststoffmaterials, während in der zweiten Phase vorzugsweise eine Druckregelung erfolgt. Dazu kann die Verwendung eines Wegmesssystems an der ersten und/oder zweiten Kolben-/Zylindereinheit vorteilhaft sein, sowie entsprechende Druck- und/oder Temperatursensoren im Bereich des Hohlraums 10 und des Kanals 20.

Die erste Phase kann gleichzeitig mit einer Regelung der Massetemperatur gekoppelt sein. Dazu wird bei konstantem Volumenstrom über eine regelbare Drossel 21 der effektive Strömungsquerschnitt des Kanals 20 so verändert, dass die durch Reibung in diesem Kanal dissipierte Wärme das Elastomermaterial auf eine vorgegebene Temperatur aufheizt. Das kann entweder durch Einstellen eines vorgewählten Druckgefälles gesteuert oder durch Messung der Temperatur vor und hinter dem Stellglied 21 geregelt werden.

Gemäß einer bevorzugten Ausführungsform des erfindungsgemäßen Spritzgießverfahrens ist ein Aufdosieren einer neuen Mischung nach dem Einspritzen des Kunststoffmaterials ohne (wesentliche) Verzögerungszeit (der so genannten Nachdruckzeit) möglich. Das Aufdosieren erfolgt mit der ersten Kolben-/Zylindereinheit 4 in der Stellung des Kolbens der zweiten Kolben-/Zylindereinheit 22 von Figur 3. Ferner ist das Evakuieren der Form bei Heißkanaltechnik über die Spritzeinheit möglich, d.h. es ist kein Werkzeugvakuum, keine Vakuumkammer oder -glocke notwendig. Es lassen sich außerdem bei der erfindungsgemäßen Spritzgießmaschine bzw. -einheit wesentlich kleinere Durchgangsbohrung in der oberen Druckplatte realisieren, wodurch eine geringere Aufbiegung der Platte erreicht werden kann.

## Patentansprüche

1. Spritzgießmaschine zum Spritzgießen von Kautschukmaterialien für Kaltkanal- und Heißkanaltechnik mit einem Extruder (12), einer ersten Kolben-/Zylindereinheit (4) und einer in Serie dazu vorgesehenen zweiten Kolben-/ Zylindereinheit (22), wobei der Zylinder (6) der ersten Kolben-/ Zylindereinheit (4) in das Ende der zweiten Kolben-/Zylindereinheit (22) mündet, das von einer zu befüllenden Spritzgießform entfernt liegt, wobei die zweite Kolben-/ Zylindereinheit (22) derart angepasst ist, dass der Kolben (26) der zweiten Kolben-/ Zylindereinheit (22) den Zylinder (24) der zweiten Kolben-/Zylindereinheit (22) im wesentlichen vollständig entleert, **dadurch gekennzeichnet, dass** im Strömungsweg zwischen den beiden Kolben-/ Zylindereinheiten eine Drossel (21) mit variablem Querschnitt zur Einstellung der Temperatur des Kautschukmaterials vorgesehen ist.

2. Spritzgießmaschine nach Anspruch 1, wobei die erste Kolben-/Zylindereinheit (4) angepasst ist, Kautschukmaterial durch den Zylinder (24) der zweiten Kolben-/Zylindereinheit (22) in eine Spritzgießform zu fördern, und wobei die zweite Kolben-/Zylindereinheit (22) angepasst ist, das Kautschukmaterial unter höherem Druck als mit der ersten Kolben-/Zylindereinheit (4) alleine in die Spritzgießform einzubringen.

3. Spritzgießmaschine nach Anspruch 1 oder 2, wobei die beiden Kolben-/Zylindereinheiten im wesentlichen senkrecht zueinander angeordnet sind.

4. Spritzgießmaschine nach einem der Ansprüche 1 bis 3, wobei die beiden Kolben-/Zylindereinheiten durch ein Umlenkstück (18) miteinander verbunden sind.

5. Spritzgießmaschine nach einem der Ansprüche 1 bis 4, wobei sich der Zylinder (24) und der Kolben (26) der zweiten Kolben-/ Zylindereinheit (22) durch das Umlenkstück (18) hindurch erstrecken.

6. Spritzgießmaschine nach Anspruch 4 oder 5, wobei das Umlenkstück (18) die Drossel (21) aufweist und mechanisch einstellbar oder elektrisch, hydraulisch oder pneumatisch betätigbar ist.

7. Spritzgießmaschine nach Anspruch 5 oder 6, wobei der Kolben (26) der zweiten Kolben-/ Zylindereinheit (22) mindestens zwei durchmessergrößere Abschnitte und einen dazwischen liegenden durchmesserkleineren Abschnitt aufweist, wobei der Durchmesser der durchmessergrößeren Abschnitte im wesentlichen dem Durchmesser des Zylinders (24) der zweiten Kolben-/Zylindereinheit (22) entspricht.

8. Spritzgießmaschine nach einem der Ansprüche 1 bis 7 mit einer mit mindestens einer der Kolben-/Zylindereinheiten in Verbindung stehenden Blas-/Saugeinheit.

9. Spritzgießmaschine nach Anspruch 8, wobei die Blas-/Saugeinheit am Umlenkstück, gegenüberliegend zur ersten Kolben-/Zylindereinheit vorgesehen ist.

10. Spritzgießmaschine nach Anspruch 8 oder 9, wobei die Blas-/Saugeinheit (56) ausgebildet ist, um den vor dem Spritzen leeren Zylinderraum (10; 36) der Kolben-/Zylindereinheit(en) zu evakuieren und nach dem Spritzen durch Blasen zumindest den Sauganschluss (60) der Blas-/Saugeinheit (56) zu reinigen.

11. Spritzgießmaschine nach Anspruch 10, wobei die Blas-/ Saugeinheit (56) einen Stößel (60) zum Verschließen des Sauganschlusses (60) aufweist.

12. Spritzgießmaschine nach einem der Ansprüche 1 bis 11, wobei der Extruder (12) in der ersten Kolben-/ Zylindereinheit (4) angeordnet ist.

13. Spritzgießmaschine nach einem der Ansprüche 1 bis 12, wobei die erste Kolben-/Zylindereinheit (4) im wesentlichen horizontal und die zweite Kolben-/ Zylindereinheit (22) im wesentlichen vertikal angeordnet sind.

14. Verfahren zum Spritzgießen von Kautschukmaterialien in Kaltkanal- oder Heißkanaltechnik, mit den Schritten:
a) Zuführen von Kautschukmaterial in eine Spritzgießform mittels einer einen ersten Kolben und einen ersten Zylinder aufweisenden ersten Kolben-/ Zylindereinheit durch einen zweiten Zylinder einer zweiten Kolben-/ Zylindereinheit hindurch, wobei der Zylinder der ersten Kolben-/ Zylindereinheit in das Ende der zweiten Kolben-/Zylindereinheit mündet, das von der Spritzgießform entfernt liegt, wobei im Strömungsweg zwischen den beiden Kolben-/ Zylindereinheiten eine Drossel mit variablem Querschnitt zur Einstellung der Temperatur des Kautschukmaterials vorgesehen ist, und wobei ein zweiter Kolben der zweiten Kolben-/Zylindereinheit den Strömungsweg zur Spritzgießform freigibt;
b) Bewegen des zweiten Kolbens in den zweiten Zylinder, um das im zweiten Zylinder befindliche Kautschukmaterial in die Spritzgießform einzubringen, wobei der Kolben der zweiten Kolben-/ Zylindereinheit den Zylinder der zweiten Kolben-/Zylindereinheit im wesentlichen vollständig entleert; und
c) Zurückfahren des zweiten Kolbens.

15. Verfahren nach Anspruch 14, wobei die zweite Kolben-/Zylindereinheit das Kautschukmaterial unter höherem Druck als mit der ersten Kolben-/ Zylindereinheit alleine in die Spritzgießform einbringt.

16. Verfahren nach Anspruch 14 oder 15, wobei das Kautschukmaterial mittels einer Temperaturregelung auf eine vorbestimmte Temperatur erwärmt wird.

17. Verfahren nach einem der Ansprüche 14 bis 16, wobei die Einstellung der Temperatur des Kautschukmaterials durch Erhöhung und Verringerung der Reibung des Kautschukmaterials mindestens einem der Strömungskanäle erfolgt.

18. Verfahren nach einem der Ansprüche 14 bis 17, wobei die Drossel mechanisch einstellbar oder elektrisch, hydraulisch oder pneumatisch betätigt wird und bei konstantem Volumenstrom die Massetemperatur des Kautschukmaterials gesteuert bzw. elektronisch geregelt wird.

19. Verfahren nach einem der Ansprüche 14 bis 18, wobei vor dem Zuführen des Kautschukmaterials gemäß Schritt a) der leere Zylinderraum der Kolben-/Zylindereinheit(en) mittels einer Blas-/Saugeinheit evakuiert wird.

20. Verfahren nach Anspruch 19 mit dem weiteren Schritt d) des Reinigens zumindest des Sauganschlusses der Blas-/Saugeinheit durch Blasen, wozu der zweite Kolben aus dem zweiten Zylinder heraus bewegt wird.

21. Verfahren nach Anspruch 20, wobei der zweite Kolben nach dem Reinigungsschritt d) eingefahren wird, um den zweiten Zylinder zu schließen und ein Evakuieren zu ermöglichen, und wobei nach dem Evakuieren der zweite Zylinder weiter eingefahren wird, um den Sauganschluss der Blas-/Saugeinheit zu verschließen und den evakuierten Zustand zum Zuführen des Kautschukmaterials gemäß Schritt a) aufrecht zu erhalten.

22. Verfahren nach einem der Ansprüche 14 bis 21, wobei nach dem Einspritzen des Kautschukmaterials ohne wesentliche Verzögerungszeit eine neue Mischung aufdosiert wird.

23. Verfahren nach einem der Ansprüche 14 bis 22, wobei beim Spritzgießen in Heißkanaltechnik das Evakuieren über die Spritzeinheit erfolgt.

## Claims

1. An injection moulding machine for injection moulding caoutchouc materials according to cold channel and hot channel techniques comprising an extruder (12), a first piston/cylinder unit (4) and a second piston/cylinder unit (22) mounted in series, wherein the cylinder (6) of the first piston/cylinder unit (4) leads into the end of the second piston/cylinder unit (22) located at a distance from an injection mould to be filled, wherein the second piston/cylinder unit (22) is adapted such that the piston (26) of the second piston/cylinder unit (22) essentially completely empties the cylinder (24) of the second piston/cylinder unit (22), **characterized in that** a throttle (21) of variable cross-section for adjusting the temperature of the caoutchouc material is provided in the flow path between the two piston/cylinder units.

2. The injection moulding machine according to claim 1, wherein the first piston/cylinder unit (4) is adapted to lead caoutchouc material through the cylinder (24) of the second piston/cylinder unit (22) into an injection mould, and wherein the second piston/cylinder unit (22) is adapted to feed the caoutchouc material into the injection mould under higher pressure than by means of the first piston/cylinder unit (4) alone.

3. The injection moulding machine according to claim 1 or 2, wherein the two piston/cylinder units are arranged basically perpendicularly to each other.

4. The injection moulding machine according to any one of claims 1 to 3, wherein the two piston/cylinder units are connected to each other by a diverting element (18).

5. The injection moulding machine according to any one of claims 1 to 4, wherein the cylinder (24) and the piston (26) of the second piston/cylinder unit (22) extend through the diverting element (18).

6. The injection moulding machine according to claim 4 or 5, wherein the diverting element (18) comprises the throttle (21) and is mechanically adjustable or can be actuated electrically, hydraulically or pneumatically.

7. The injection moulding machine according to claim 5 or 6, wherein the piston (26) of the second piston/cylinder unit (22) has at least two portions of greater diameter and a portion of smaller diameter therebetween, wherein the diameter of the portions of greater diameter essentially corresponds to the diameter of the cylinder (24) of the second piston/cylinder unit (22).

8. The injection moulding machine according to any one of claims 1 to 7 comprising a blow/suction unit connected to at least one of the piston/cylinder units.

9. The injection moulding machine according to claim 8, wherein the blow/suction unit is provided at the diverting element opposite to the first piston/cylinder unit.

10. The injection moulding machine according to claim 8 or 9, wherein the blow/suction unit (56) is formed to evacuate the cylinder chamber (10; 36) of the piston/cylinder unit(s) which is empty prior to the injection and, after injection, to clean at least the suction connection (60) of the blow/suction unit (56) by blowing.

11. The injection moulding machine according to claim 10, wherein the blow/suction unit (56) has a plunger (60) for sealing the suction connection (60).

12. The injection moulding machine according to any one of claims 1 to 11, wherein the extruder (12) is arranged in the first piston/cylinder unit (4).

13. The injection moulding machine according to any one of claims 1 to 12, wherein the first piston/cylinder unit (4) is essentially horizontal and the second piston/cylinder unit (22) is essentially vertical.

14. A method for injection moulding caoutchouc materials in cold channel or hot channel technique comprising the following steps:
(a) supplying caoutchouc material into an injection mould by means of a first piston/cylinder unit comprising a first piston and a first cylinder through a second cylinder of a second piston/cylinder unit, wherein the cylinder of the first piston/cylinder unit leads into the end of the second piston/cylinder unit located at a distance from the injection mould, wherein a throttle of variable cross-section for adjusting the temperature of the caoutchouc material is provided in the flow path between the two piston/cylinder units, and wherein a second piston of the second piston/cylinder unit frees the flow path to the injection mould;
(b) displacing the second piston into the second cylinder in order to introduce the caoutchouc material located inside the second cylinder into the injection mould, wherein the piston of the second piston/cylinder unit essentially completely empties the cylinder of the second piston/cylinder unit; and
(c) retracting the second piston.

15. The method according to claim 14, wherein the second piston/cylinder unit introduces the caoutchouc material into the injection mould under greater pressure than with the first piston/cylinder unit alone.

16. The method according to claim 14 or 15, wherein the caoutchouc material is heated to a predetermined temperature via a temperature control.

17. The method according to any one of claims 14 to 16, wherein the adjustment of the temperature of the caoutchouc material is carried out by increasing and reducing the friction of the caoutchouc material in at least one of the flow channels.

18. The method according to any one of claims 14 to 17, wherein the throttle is mechanically adjustable or is actuated electrically, hydraulically or pneumatically and wherein the mass temperature of the caoutchouc material is controlled or electronically regulated at constant volume flow.

19. The method according to any one of claims 14 to 18, wherein, prior to the supply of the caoutchouc material according to step (a), the empty cylinder chamber of the piston/cylinder unit(s) is evacuated by means of a blow/suction unit.

20. The method according to claim 19 comprising the further step (d) cleaning at least the suction connection of the blow/suction unit by blowing, and wherein, to this end, the second piston is moved out of the second cylinder.

21. The method according to claim 20, wherein the second piston is moved in after the cleaning step (d) in order to close the second cylinder and enable an evacuation, and wherein, after the evacuation, the second cylinder is further moved in to close the suction connection of the blow/suction unit and to maintain the evacuated condition for supplying the caoutchouc material according to step (a).

22. The method according to any one of claims 14 to 21, wherein, after the injection of the caoutchouc material, a new mixture is added without substantial delay.

23. The method according to any one of claims 14 to 22, wherein when injection moulding with hot channel technique the evacuation takes place via the injection unit.

## Revendications

1. Machine de moulage par injection destinée au moulage par injection de matériaux à base de caoutchouc pour les technologies à canaux froids et chauffés, comprenant une extrudeuse (12), une première unité à piston et cylindre (4) et une seconde unité à piston et cylindre (22) prévue en série avec cette dernière, dans laquelle le cylindre (6) de la première unité à piston et cylindre (4) débouche dans l'extrémité de la seconde unité à piston et cylindre (22) qui est éloignée d'un moule de moulage par injection à remplir, dans laquelle la seconde unité à piston et cylindre (22) est conçue de telle façon que le piston (26) de la seconde unité à piston et cylindre (22) vide sensiblement complètement le cylindre (24) de la seconde unité à piston et cylindre (22),
**caractérisée en ce qu'**un étranglement à section variable est prévu dans le trajet d'écoulement entre les deux unités à piston et cylindre pour le réglage de la température du matériau à base de caoutchouc.

2. Machine de moulage par injection selon la revendication 1, dans laquelle la première unité à piston et cylindre (4) est conçue pour convoyer du matériau à base de caoutchouc au moyen du cylindre (24) de la seconde unité à piston et cylindre (22) jusque dans un moule de moulage par injection, et dans laquelle la seconde unité à piston et cylindre (22) est conçue pour introduire le matériau à base de caoutchouc seule dans le moule de moulage par injection sous une pression plus élevée qu'avec la première unité à piston et cylindre (4).

3. Machine de moulage par injection selon la revendication 1 ou 2, dans laquelle les deux unités à piston et cylindre sont agencées sensiblement perpendiculairement l'une par rapport à l'autre.

4. Machine de moulage par injection selon l'une des revendications 1 à 3, dans laquelle les deux unités à piston et cylindre sont reliées l'une à l'autre via une pièce de renvoi (18).

5. Machine de moulage par injection selon l'une des revendications 1 à 4, dans laquelle le cylindre (24) et le piston (26) de la seconde unité à piston et cylindre (22) s'étendent à travers la pièce de renvoi (18).

6. Machine de moulage par injection selon la revendication 4 ou 5, dans laquelle la pièce de renvoi (18) comporte l'étranglement (21), et peut être réglée par voie mécanique ou actionnée par voie électrique, hydraulique ou pneumatique.

7. Machine de moulage par injection selon la revendication 5 ou 6, dans laquelle le piston (26) de la seconde unité à piston et cylindre (22) comprend au moins deux tronçons de grand diamètre et un tronçon de petit diamètre situé entre ceux ci, le diamètre des tronçons de grand diamètre correspondant sensiblement au diamètre du cylindre (24) de la seconde unité à piston et cylindre (22).

8. Machine de moulage par injection selon l'une des revendications 1 à 7, comprenant une unité de soufflage/aspiration qui communique avec l'une au moins des unités à piston et cylindre.

9. Machine de moulage par injection selon la revendication 8, dans laquelle l'unité de soufflage/aspiration est prévue au niveau de la pièce de renvoi, à l'opposé de la première unité à piston et cylindre.

10. Machine de moulage par injection selon la revendication 8 ou 9, dans laquelle l'unité de soufflage/aspiration (56) est réalisée pour évacuer la chambre cylindrique (10 ; 36) vide avant l'injection de la ou des unité(s) à piston et cylindre et pour nettoyer par soufflage après l'injection au moins le raccord d'aspiration (60) de l'unité de soufflage/aspiration (56).

11. Machine de moulage par injection selon la revendication 10, dans laquelle l'unité de soufflage/aspiration (56) comprend un poussoir (60) pour obturer le raccord d'aspiration (60).

12. Machine de moulage par injection selon l'une des revendications 1 à 11, dans laquelle l'extrudeuse (12) est agencée dans la première unité à piston et cylindre (4).

13. Machine de moulage par injection selon l'une des revendications 1 à 12, dans laquelle la première unité à piston et cylindre (4) est agencée sensiblement horizontale et la seconde unité à piston et cylindre (22) est agencée sensiblement verticale.

14. Procédé pour le moulage par injection de matériaux à base de caoutchouc dans les technologies à canaux froids ou chauffés, comprenant les étapes consistant à :
a) introduire un matériau à base de caoutchouc dans un moule de moulage par injection au moyen d'une première unité à piston et cylindre qui comporte un premier piston et un second cylindre en traversant un second cylindre d'une seconde unité à piston et cylindre, dans lequel le cylindre de la première unité à piston et cylindre débouche dans l'extrémité de la seconde unité à piston et cylindre qui est éloignée du moule de moulage par injection, et dans lequel un étranglement à section variable est prévu dans le trajet d'écoulement entre les deux unités à piston et cylindre pour régler la température du matériau à base de caoutchouc, et dans lequel un second piston de la seconde unité à piston et cylindre libère le trajet d'écoulement vers le moule de moulage par injection ;
b) déplacer le second piston dans le second cylindre afin d'introduire le matériau à base de caoutchouc qui se trouve dans le second cylindre vers le moule de moulage par injection, et le piston de la seconde unité à piston et cylindre vide sensiblement complètement le cylindre de la seconde unité à piston et cylindre ; et
c) rétracter le second piston.

15. Procédé selon la revendication 14, dans lequel la seconde unité à piston et cylindre introduit le matériau à base de caoutchouc seule dans le moule de moulage par injection sous une pression plus élevée qu'avec la première unité à piston et cylindre.

16. Procédé selon la revendication 14 ou 15, dans lequel le matériau à base de caoutchouc est réchauffé à une température prédéterminée au moyen d'un système de régulation de température.

17. Procédé selon l'une des revendications 14 à 16, dans lequel le réglage de la température du matériau à base de caoutchouc a lieu par augmentation et réduction de la friction du matériau à base de caoutchouc dans l'un au moins des canaux d'écoulement.

18. Procédé selon l'une des revendications 14 à 17, dans lequel l'étranglement est réglable par voie mécanique ou actionnée par voie électrique, hydraulique ou pneumatique, et la température de masse du matériau à base de caoutchouc est commandée ou régulée par voie électronique avec un débit volumétrique constant.

19. Procédé selon l'une des revendications 14 à 18, dans lequel avant l'introduction du matériau à base de caoutchouc selon l'étape a) la chambre cylindrique vide de l'unité ou des unités à piston et cylindre est évacuée au moyen d'une unité de soufflage/aspiration.

20. Procédé selon la revendication 19, comprenant l'étape supplémentaire d) consistant à nettoyer au moins le raccord d'aspiration de l'unité de soufflage/aspiration par soufflage, ce pourquoi le second piston est déplacé hors du second cylindre.

21. Procédé selon la revendication 20, dans lequel le second piston est rétracté après l'étape de nettoyage d) afin de fermer le second cylindre et de permettre une évacuation, et dans lequel après l'évacuation le second cylindre est rétracté pour obturer le raccord d'aspiration de l'unité de soufflage/aspiration et maintenir l'état évacué pour l'introduction du matériau à base de caoutchouc selon l'étape a).

22. Procédé selon l'une des revendications 14 à 21, dans lequel après l'injection du matériau à base de caoutchouc on procède au dosage d'un nouveau mélange sans temps de retard sensible.

23. Procédé selon l'une des revendications 14 à 22, dans lequel, lors du moulage par injection en technologie à canaux chauffés, l'évacuation a lieu via l'unité d'injection.
